# EUROPEAN PATENT SPECIFICATION

(11) **EP 2 642 560 B1**
(45) Date of publication and mention of the grant of the patent: **27.06.2018**
(21) Application number: 12739488.0
(22) Date of filing: 25.01.2012
(51) Int. Cl.: H01M 10/04, H01M 10/0587, H01M 10/42, H01M 2/16

(54) **CYLINDRICAL SECONDARY BATTERY**
ZYLINDERFÖRMIGE SEKUNDÄRBATTERIE
BATTERIE SECONDAIRE CYLINDRIQUE

(30) Priority: 25.01.2011 KR 20110007258; 25.01.2012 KR 20120007207
(43) Date of publication of application: 25.09.2013
(73) Proprietor: LG Chem, Ltd., Youngdungpo-gu Seoul 150-721 (KR)
(72) Inventor: KIM, Yong-Chan, Yesan-gun Chungcheongnam-do 340-923 (KR); RYU, Duk-Hyun, Daejeon 305-340 (KR); KU, Cha-Hoon, Daejeon 305-738 (KR); SUNG, Nak-Gi, Gongju-si Chungcheongnam-do 314-030 (KR)
(74) Representative: Cabinet Plasseraud
(86) International application number: PCT/KR2012/000597
(87) International publication number: WO 2012/102548

(56) References cited:
- JP-A- 2000 003 722
- KR-A- 20070 081 547
- KR-A- 20090 008 060
- KR-A- 20090 027 314
- KR-A- 20090 085 207
- US-A1- 2006 073 380
- US-A1- 2006 154 139
- US-A1- 2010 209 765
- US-A1- 2010 255 357

## Description

### TECHNICAL FIELD

The present disclosure relates to a cylindrical secondary battery, and more specifically to a cylindrical secondary battery including a jelly-roll type electrode assembly with improved heat resistance in which at least one tape made of a polymeric resin having a melting point of at least 130 °C is attached to a cathode.

### BACKGROUND ART

Recently, there has been growing interest in energy storage technologies. As the application fields of energy storage technologies have been extended to mobile phones, camcorders, notebook computers and even electric cars, efforts have increasingly been made towards the research and development of electrochemical devices. In this aspect, electrochemical devices have attracted the most attention. The development of secondary batteries capable of repeatedly charging and discharging has been the focus of particular interest. In recent years, extensive research and development has been conducted to design new electrodes and batteries for the purpose of improving capacity density and specific energy of the batteries.

Many secondary batteries are currently available. Lithium secondary batteries developed in the early 1990's have received a great deal of attention due to their advantages of higher operating voltages and much higher energy densities than conventional batteries using aqueous electrolyte solutions, such as Ni-MH batteries, Ni-Cd batteries and H₂SO₄-Pb batteries.

Generally, a secondary battery is fabricated by laminating or winding one or more unit cells, each of which includes a cathode, an anode and a separator interposed between the cathode and the anode, accommodating the laminated or wound unit cells in a metal can or a laminate sheet case, and injecting or impregnating an electrolyte solution thereinto.

Constituent electrode assemblies of secondary batteries have a cathode/separator/anode structure and are broadly classified into jelly-roll (i.e. winding) and stack (i.e. laminate) types by their structure. A winding (jelly-roll) type electrode assembly is constructed by interposing a separator between a cathode and an anode, each of which is in the form of a long sheet to which an active material is applied, and winding the electrode structure. US 2010/209765, US 2006/154139, KR 2009 0027314, US 2006/073380 and US 2010/255357 disclose several winding type electrode assemblies. A stack type electrode assembly is constructed by sequentially laminating a plurality of cathodes and anodes, each of which has a predetermined size, between which separators are interposed. The jelly-roll type electrode assembly is easy to construct and has an advantage of high energy density per unit weight.

A porous polyolefin substrate commonly used as a separator of a lithium secondary battery including a jelly-roll type electrode assembly undergoes extreme thermal shrinkage at a temperature of 100 °C or higher due to its material characteristics and production processes including elongation. Particularly, since a core of the jelly-roll type electrode assembly, where a tension of the separator in the transverse direction (TD) is relatively weak, is likely to deform severely, extreme thermal shrinkage occurs at a portion of the separator corresponding to a distal end of an uncoated portion of a cathode upon heating. This extreme thermal shrinkage causes detachment of an edge tape of the cathode. As a result, the uncoated portion of the cathode is brought into contact with an uncoated portion of an anode, which increases the possibility of fire.

Despite numerous efforts to solve such problems, there remains a need to develop a cylindrical battery including a jelly-roll type electrode assembly with improved heat resistance.

### DISCLOSURE

### Technical Problem

The present disclosure is designed to solve the problems of the prior art, and therefore it is an object of the present disclosure to provide a cylindrical secondary battery including a jelly-roll type electrode assembly that has improved heat resistance and can be constructed in an easy manner.

### Technical Solution

According to an aspect of the present disclosure, there is provided a cylindrical secondary battery including:
a jelly-roll type electrode assembly in which a first electrode, a second electrode and a separator interposed between the two electrodes are wound together, wherein a first electrode tape including a polymeric resin film having a melting point of at least 130 °C is attached to a first surface of an uncoated portion of the first electrode at a core of the jelly-roll type electrode assembly;
a center pin inserted to penetrate the central portion of the jelly-roll type electrode assembly;
a battery can accommodating the electrode assembly and the center pin;
a cap assembly coupled to an upper opening of the battery can to seal the can; and
a gasket interposed between the battery can and the cap assembly.

The polymeric resin film having a melting point of at least 130 °C is made of at least one polymer selected from the group consisting of polyethylene terephthalate, polyacrylonitrile, polymethyl methacrylate, polyamide, polystyrene, polytetrafluoroethylene, polytetramethylene terephthalate, polyvinyl alcohol, polyvinylcarbazole, polyvinyl chloride, polyvinylidene chloride and polyvinylidene fluoride.

The first electrode tape includes one or two adhesive layers on both surfaces of the polymeric resin film.

The cylindrical secondary battery may further comprise a second electrode tape attached to a second surface of the uncoated portion of the first electrode, said second surface being the surface opposite of the first surface on which the first electrode tape (222') is attached.

The first electrode tape is attached.

The first electrode tape may be attached to a portion of the surface of the first electrode ranging from the distal end of the uncoated portion of the first electrode at the core of the jelly-roll type electrode assembly to a position distant 6 to 10 mm from the distal end.

The first electrode tape may have a thickness of 10 to 50 µm.

The center pin may be made of at least one material selected from the group consisting of stainless steel, copper, tantalum, titanium, aluminum, niobium, zinc, tin, tantalum oxide, titanium oxide, aluminum oxide, niobium oxide, zinc oxide, tin oxide, copper oxide, polyethylene, polypropylene, polyimide, polyamide, polycarbonate and polymethyl methacrylate.

The center pin may have a hollow structure.

The separator may include a porous polyolefin substrate.

The porous polyolefin substrate may be made of a polymer selected from the group consisting of polyethylene, polypropylene, polybutylene and polypentene.

The first electrode may be a cathode and the second electrode may be an anode.

The first electrode may be an anode and the second electrode may be a cathode.

The cap assembly may include: a top cap closing an open end of the battery can; a positive temperature coefficient (PTC) thermistor arranged in contact with the top cap; and a safety vent arranged in contact with the PTC thermistor on one surface thereof and in partial contact with the gasket on the other surface thereof, and electrically connected to the electrode assembly.

### Advantageous Effects

In a prior art battery, since a separator is likely to deform severely at a core of a jelly-roll type electrode assembly, where a tension of the separator is relatively weak, extreme thermal shrinkage occurs when the battery is heated. Due to the thermal shrinkage of the separator, uncoated portions of electrodes are exposed to each other and are brought into contact with each other. As a result, short circuits between the electrodes are caused, increasing the possibility of fire. In contrast, in the cylindrical secondary battery of the present disclosure, the electrode tape with good heat resistance and insulation properties is attached to the uncoated portion of the first electrode to prevent direct contact between the uncoated portions of the electrodes exposed by thermal shrinkage of the separator when the battery is heated. Therefore, the cylindrical secondary battery of the present disclosure can be prevented from catching fire due to short circuits between the electrodes.

### DESCRIPTION OF DRAWINGS

The accompanying drawings illustrate preferred embodiments of the present disclosure and, together with the foregoing disclosure, serve to provide further understanding of the present disclosure. However, the present disclosure should not be construed as being limited to the embodiments illustrated in the drawings.
FIG. 1 is a cross-sectional view of a jelly-roll type electrode assembly according to the prior art in which no electrode tape is attached to an uncoated portion of a first electrode.
FIG. 2 is a cross-sectional view of a jelly-roll type electrode assembly for a cylindrical secondary battery according to an embodiment of the present disclosure in which an electrode tape is attached to an uncoated portion of a first electrode.
FIG. 3 is an exploded view of an unwound jelly-roll type electrode assembly in which an electrode tape is attached to an uncoated portion of a first electrode according to the prior art.
FIG. 4a is a photograph showing a phenomenon in which an uncoated portion of a first electrode at area **C** in FIG. 3 is exposed.
FIG. 4b is a photograph showing a phenomenon in which a portion of a separator at area **B** in FIG. 3 is thermally shrunk.
FIG. 5 is a cross-sectional view of an unwound jelly-roll type electrode assembly for a cylindrical battery according to an embodiment of the present disclosure in which two electrode tapes are attached to both surfaces of an uncoated portion of a first electrode, respectively.
FIG. 6 is a cross-sectional view of an unwound jelly-roll type electrode assembly for a cylindrical battery according to an embodiment of the present disclosure in which two electrode tapes are attached between an uncoated portion of a first electrode and a first separator and between an uncoated portion of a second electrode and a second separator, respectively.
FIG. 7 is a cross-sectional view of a cylindrical battery according to an embodiment of the present disclosure.
FIGS. 8a and 8b are photographs showing hotbox test results on a cylindrical battery according to an embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In addition, the description proposed herein is just a preferable example for the purpose of illustrations only, not intended to limit the scope of the claims, so it should be understood that other equivalents and modifications could be made thereto without departing from the scope of the claims at the time of filing the present application.

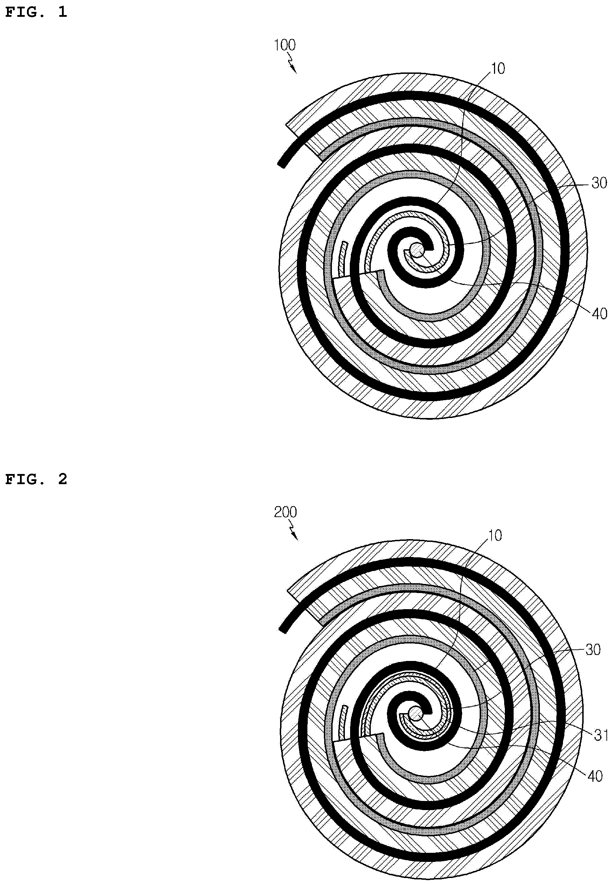

Generally, a jelly-roll type electrode assembly for use in a prior art battery, such as a cylindrical battery, is constructed by laminating a cathode, an anode and a separator, and winding the laminate. Such an electrode assembly is illustrated in FIG. 1.

Referring to FIG. 1, the jelly-roll type electrode assembly 100 has a core where an uncoated portion 30 of a first electrode and a separator 10 begin to wind. A center pin 40 is inserted into the core. When the jelly-roll type electrode assembly 100 is heated during charge or use, the separator 10, which is generally produced by elongation, is thermally shrunk and the uncoated portion 30 of the first electrode may come into contact with an uncoated portion of a second electrode. As a result, the electrodes are shortcircuited, posing a risk of fire.

In an aspect, the present disclosure provides a cylindrical secondary battery including: a jelly-roll type electrode assembly in which a first electrode, a second electrode and a separator interposed between the two electrodes are wound together, wherein an electrode tape including a polymeric resin film having a melting point of at least 130 °C is attached to at least one surface of an uncoated portion of the first electrode at a core of the jelly-roll type electrode assembly; a center pin inserted to penetrate the central portion of the jelly-roll type electrode assembly; a battery can accommodating the electrode assembly and the center pin; a cap assembly coupled to an upper opening of the battery can to seal the can; and a gasket interposed between the battery can and the cap assembly.

Referring to FIG. 2, a jelly-roll type electrode assembly for a cylindrical battery according to an embodiment of the present disclosure is illustrated. Specifically, the jelly-roll type electrode assembly 200 has a structure in which a first electrode, a second electrode and a separator interposed between the electrodes are wound together. One surface of an electrode tape 31 is attached in contact with at least one surface of an uncoated portion 30 of the first electrode at a core of the jelly-roll type electrode assembly 200. The electrode tape 31 includes a polymeric resin film having a melting point of at least 130 °C. A center pin 40 is inserted into the core.

Generally, an electrode tape attached to an uncoated portion of an electrode tends to shrink when exposed to a high temperature and is thus detached from the uncoated portion of the electrode. Further, a separator may be thermally shrunk in the transverse direction (TD) at a core of a jelly roll, where a tension of the separator decreases. As a result, internal short circuits are caused between a portion of an uncoated portion of a first electrode exposed by thermal shrinkage of the electrode tape when exposed to a high temperature and a portion of an opposite second electrode exposed by thermal shrinkage of the separator, posing a risk of fire, etc.

A basic cause of such problems comes from thermal shrinkage of the electrode tape. Accordingly, the use of conventional polypropylene electrode tapes undergoing thermal shrinkage at 130 °C poses a risk of fire when exposed to a temperature higher than 130 °C.

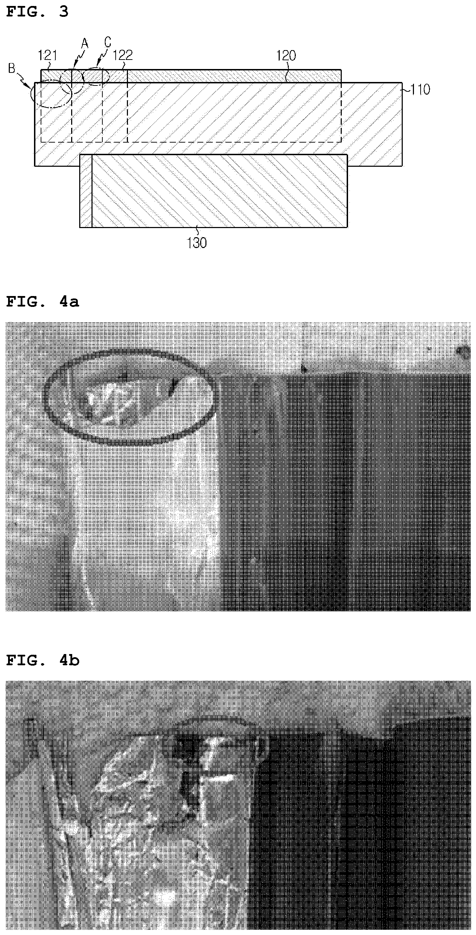

FIG. 3 is an exploded view of an unwound jelly-roll type electrode assembly in which an electrode tape is attached to an uncoated portion of a first electrode according to the prior art.

Referring to FIG. 3, a separator 110 is arranged between a coated portion 120 of a first electrode and a coated portion 130 of a second electrode, and an electrode tape 122 made of polypropylene is attached to the surface of the uncoated portion 121 of the first electrode.

The electrode assembly is wound into a jelly-roll configuration and is applied to a secondary battery. In this case, however, when the secondary battery is exposed to a high temperature of 130 °C or higher, the electrode tape 122 is thermally shrunk, as explained above, and as a result, the uncoated portion of the electrode may be exposed, causing short circuits at area **A.** FIG. 4a shows area **C** where the uncoated portion 121 of the first electrode is exposed by thermal shrinkage of the electrode tape 122. FIG. 4b shows area **B** where the separator 110 is thermally shrunk when the secondary battery is exposed to a high temperature.

According to an embodiment of the present disclosure, the electrode tape includes a polymeric resin film having a melting point of at least 130 °C to prevent thermal shrinkage even when exposed to a temperature of 130 °C or higher.

The polymeric resin film has a melting point of at least 130 °C, between 130 and 400 °C or between 150 and 350 °C. Any polymer that is highly thermally stable even when the cylindrical battery is exposed to a considerably high temperature may be used as a material for the polymeric resin film. Examples of such polymeric materials include, but are not limited to, polyethylene terephthalate, polyacrylonitrile, polymethyl methacrylate, polyamide, polystyrene, polytetrafluoroethylene, polytetramethylene terephthalate, polyvinyl alcohol, polyvinylcarbazole, polyvinyl chloride, polyvinylidene chloride, and polyvinylidene fluoride. These polymers may be used alone or as a mixture thereof.

According to a particular embodiment of the present disclosure, the electrode tape may include a polyethylene terephthalate (PET) resin. The PET resin is one of the most representative polyesters synthesized from ethylene glycol and terephthalic acid. The PET resin has a very high melting point from 250 to 260 °C and is advantageous in terms of heat resistance and insulation. The PET tape may be any of those that are currently commercially available. The PET tape may be chosen from those considered suitable for the embodiment of the present disclosure.

The position of the electrode on the first electrode tape is not particularly limited. For example, the electrode tape may be attached to a portion of the surface of the first electrode ranging from the distal end of the uncoated portion of the first electrode at the core of the jelly-roll type electrode assembly to a position distant 6 to 10 mm from the distal end. The reason for the length of the electrode tape is that the separator may be shrunk by about 6 to 10 mm when the battery is heated and the uncoated portion of the first electrode may be exposed by thermal shrinkage of the separator. The electrode tape may have a thickness of 10 to 50 µm.

According to an embodiment of the present disclosure, the electrode tape may be attached to one surface of the uncoated portion of the first electrode. According to an alternative embodiment of the present disclosure, the electrode tape may be provided in two. In this embodiment, the two electrode tapes are attached to both surfaces of the uncoated portion of the first electrode, respectively.

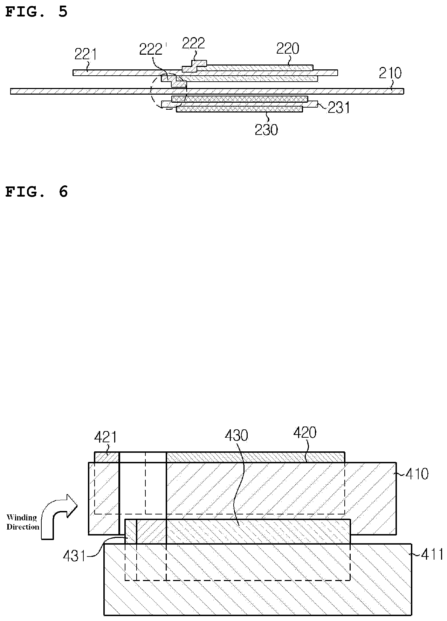

FIG. 5 is a cross-sectional view of an unwound jelly-roll type electrode assembly for a cylindrical battery according to an embodiment of the present disclosure in which two electrode tapes are attached to both surfaces of an uncoated portion of a first electrode, respectively.

Referring to FIG. 5, a first electrode and a second electrode are arranged at both side surfaces of a separator 210, respectively. The first electrode consists of a coated portion 220 and an uncoated portion 221. The second electrode consists of a coated portion 230 and an uncoated portion 231. Electrode tapes 222 and 222' may be attached to both surfaces of the uncoated portion of the first electrode, respectively.

Each of the electrode tapes may include one or two adhesive layers on one or both surfaces of a polymeric resin film.

With this arrangement, one of the electrode tapes is attached to one surface of the uncoated portion of the first electrode and one surface of the separator opposite to the one surface of the uncoated portion of the first electrode to prevent exposure of the uncoated portion of the electrode and to inhibit thermal shrinkage of the separator in the TD direction.

Referring to FIG. 6, a first separator 410 is interposed between a first electrode and a second electrode. The first electrode includes a coated portion 420 and an uncoated portion 421. The second electrode includes a coated portion 430 and an uncoated portion 431. A second separator 411 is arranged on the second electrode.

A first electrode tape and a second electrode tape, each of which includes adhesive layers on both surfaces thereof, are provided on the uncoated portion 421 of the first electrode and the uncoated portions 431 of the second electrode, respectively. With this arrangement, the first electrode tape is attached to the uncoated portion of the first electrode and one surface of the first separator opposite to the uncoated portion of the first electrode, and the second separator is attached to the uncoated portion of the second electrode and one surface of the second separator opposite to the uncoated portion of the second electrode to prevent exposure of the uncoated portions of the electrodes and to prevent thermal shrinkage of the separators.

The separator may include a porous polyolefin substrate. As materials for the porous polyolefin substrate, there may be used, for example, polyethylene, polypropylene, polybutylene and polypentene.

The first electrode may be a cathode and the second electrode may be an anode. Alternatively, the first electrode may be an anode and the second electrode may be a cathode.

The jelly-roll type electrode assembly is constructed by attaching the first electrode tape to at least one surface of the uncoated portion of the first electrode, attaching the second electrode tape to at least one surface of the uncoated portion of the second electrode, interposing the separator between the first electrode and the second electrode, followed by lamination and winding.

There is no particular restriction on the production method of the cathode and the anode. Each of the electrodes can be produced by binding an electrode active material to an electrode current collector by suitable methods known in the art.

The cathode active material may be any of those that are commonly used in cathodes of conventional electrochemical devices. Non-limiting examples of particularly preferred cathode active materials include lithiated manganese oxides, lithiated cobalt oxides, lithiated nickel oxides, lithiated iron oxides, and composite oxides thereof.

The anode active material may be any of those that are commonly used in anodes of conventional electrochemical devices. Non-limiting examples of particularly preferred anode active materials include lithium, lithium alloys, and lithium intercalation materials, such as carbon, petroleum coke, activated carbon, graphite and other carbon materials. Non-limiting examples of cathode current collectors suitable for use in the cathode include aluminum foils, nickel foils, and combinations thereof. Non-limiting examples of anode current collectors suitable for use in the anode include copper foils, gold foils, nickel foils, copper alloy foils, and combinations thereof.

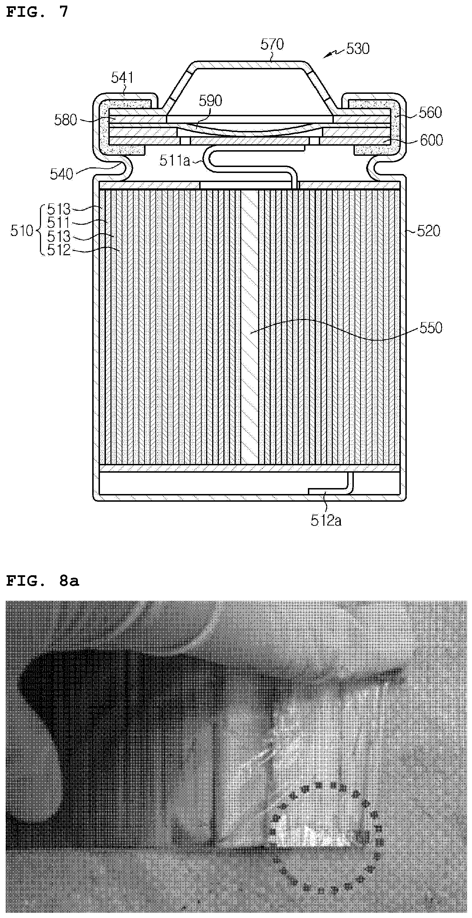

FIG. 7 is a cross-sectional view of a cylindrical battery according to an embodiment of the present disclosure.

Referring to FIG. 7, the cylindrical secondary battery includes a jelly-roll type electrode assembly 510, a center pin 550 inserted to penetrate the central portion of the jelly-roll type electrode assembly, a battery can 520 accommodating the electrode assembly 510 and the center pin 550, a cap assembly 530 coupled to an upper opening of the battery can 520 to seal the can, and a gasket 560 interposed between the battery can and the cap assembly.

When the electrode assembly is wound into a jelly-roll configuration, the center pin is inserted into the core of the electrode assembly to further facilitate winding of the electrode assembly and functions to fix and support the electrode assembly.

Generally, the center pin may be made of a steel material, such as SUS, having a predetermined strength. Alternatively, the center pin may be made of a flexible metal material, metal oxide or polymer to prevent deformation of the hollow inner structure against external impacts, for example, when the battery falls down or is pressed.

The center pin may be made of a material selected from the group consisting of, but not limited to, stainless steel, copper, tantalum, titanium, aluminum, niobium, zinc, tin, tantalum oxide, titanium oxide, aluminum oxide, niobium oxide, zinc oxide, tin oxide, copper oxide, polyethylene, polypropylene, polyimide, polyamide, polycarbonate and polymethyl methacrylate.

The center pin may have a hollow structure. In this case, the center pin may serve as a passage through which gases produced as a result of internal reactions during charging/discharging and operation of the battery escape.

The battery can 520 is provided with a beading portion 540 on the top end thereof and a clamping portion 541 on the beading portion 540. The beading portion 540 is designed to mount the cap assembly 530 thereon and the clamping portion 541 is designed to seal the battery.

The jelly-roll type electrode assembly 510 has a structure in which a cathode 511, an anode 512 and a separator 513 interposed between the cathode 511 and the anode 512 are wound into a jelly roll configuration. A cathode tab 511a attached to the cathode 511 is usually connected to the cap assembly 530, and an anode tap 512a attached to the anode 512 is connected to the bottom of the battery can 520.

The cap assembly 530 includes: a top cap 570 closing an open end of the battery can and forming a cathode terminal; a positive temperature coefficient (PTC) thermistor 580 arranged in contact with the top cap; and a safety vent 590 arranged in contact with the PTC thermistor on one surface thereof and in partial contact with the gasket on the other surface thereof, and electrically connected to the electrode assembly. The PTC thermistor 580 is a device whose resistance increases with increasing internal temperature of the battery to interrupt a current flowing therethrough. The safety vent 590 is adapted to interrupt a current flowing therethrough and to exhaust gases when the internal pressure of the battery increases. The cap assembly 530 may further include a current interruption device 600 to which the cathode tab 511a is connected. The cap assembly 530 is coupled to an open upper end of the battery can 520 and is mounted on the beading portion 540 of the battery can 520.

An electrolyte solution (not shown), together with the jelly-roll type electrode assembly 510, is accommodated in the battery can 510.

The electrolyte solution consists of a salt and an organic solvent capable of dissolving or dissociating the salt. The salt has a structure represented by A⁺B⁻ wherein A⁺ is an alkali metal cation, such as Li⁺, Na⁺, K⁺ or a combination thereof, and B⁻ is an anion, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof. Examples of organic solvents suitable for dissolving or dissociating the salt include, but are not limited to, propylene carbonate(PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) and γ-butyrolactone. These organic solvents may be used alone or as a mixture thereof.

The electrolyte solution may be injected in any suitable step during fabrication of the battery depending on the manufacturing processes and desired physical properties of a final product. Specifically, the electrolyte solution may be injected before battery assembly or in the final step of battery assembly.

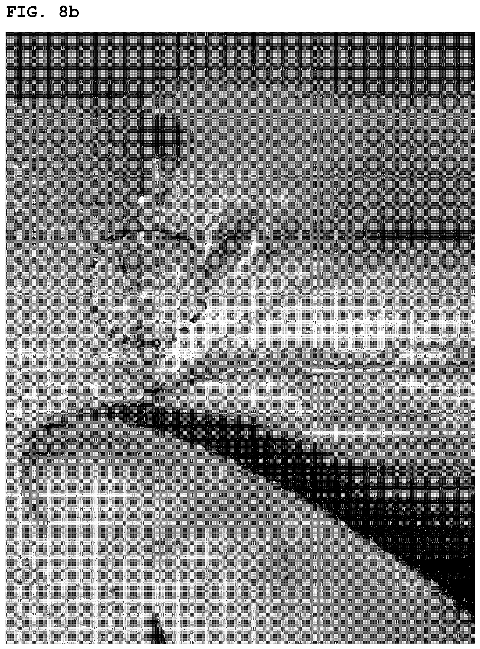

FIGS. 8a and 8b are photographs showing hotbox test results on a cylindrical battery according to an embodiment of the present disclosure.

In the hotbox test, the state of the cylindrical secondary battery was evaluated after heating at a rate of 5 °C/min and left alone at 130 °C for 1 hr.

As a result of the hotbox test, although the separator was thermally shrunk at the core of the jelly-roll type electrode assembly (see FIG. 8a), no thermal shrinkage or detachment of the electrode tape was observed (see FIG. 8b). These results confirm that the risk of catching fire due to internal short circuits of the secondary battery is considerably reduced.

## Claims

1. A cylindrical secondary battery comprising:
a jelly-roll type electrode assembly in which a first electrode, a second electrode and a separator (210) interposed between the two electrodes are wound together;
a center pin inserted to penetrate the central portion of the jelly-roll type electrode assembly;
a can accommodating the electrode assembly and the center pin;
a cap assembly coupled to an upper opening of the can to seal the can; and
a gasket interposed between the can and the cap assembly,
**characterized in that**
a first electrode tape (222') is attached to a first surface of an uncoated portion (221) of the first electrode and to one surface of the separator (210) opposite to the first surface of the uncoated portion (221) at a core of the jelly-roll type electrode assembly,
the first electrode tape (222') includes a polymeric resin film having a melting point of at least 130 °C made of at least one polymer selected from the group consisting of polyethylene terephthalate, polyacrylonitrile, polymethyl methacrylate, polyamide, polystyrene, polytetrafluoroethylene, polytetramethylene terephthalate, polyvinyl alcohol, polyvinylcarbazole, polyvinyl chloride, polyvinylidene chloride and polyvinylidene fluoride, and
the first electrode tape (222') comprises one or two adhesive layers on both surfaces of the polymeric resin film.

2. The cylindrical secondary battery according to claim 1, wherein the first electrode tape (222') is attached to a portion of the surface of the first electrode ranging from the distal end of the uncoated portion (221) of the first electrode at the core of the jelly-roll type electrode assembly to a position distant 6 to 10 mm from the distal end.

3. The cylindrical secondary battery according to claim 1, wherein the first electrode tape (222') has a thickness of 10 to 50 µm.

4. The cylindrical secondary battery according to claim 1, wherein the center pin is made of at least one material selected from the group consisting of stainless steel, copper, tantalum, titanium, aluminum, niobium, zinc, tin, tantalum oxide, titanium oxide, aluminum oxide, niobium oxide, zinc oxide, tin oxide, copper oxide, polyethylene, polypropylene, polyimide, polyamide, polycarbonate and polymethyl methacrylate.

5. The cylindrical secondary battery according to claim 1, wherein the center pin has a hollow structure.

6. The cylindrical secondary battery according to claim 1, wherein the separator (210) comprises a porous polyolefin substrate.

7. The cylindrical secondary battery according to claim 6, wherein the porous polyolefin substrate is made of a polymer selected from the group consisting of polyethylene, polypropylene, polybutylene and polypentene.

8. The cylindrical secondary battery according to claim 1, wherein the first electrode is a cathode and the second electrode is an anode.

9. The cylindrical secondary battery according to claim 1, wherein the first electrode is an anode and the second electrode is a cathode.

10. The cylindrical secondary battery according to claim 1, wherein the cap assembly comprises: a top cap closing an open end of the can; a positive temperature coefficient (PTC) thermistor arranged in contact with the top cap; and a safety vent arranged in contact with the PTC thermistor on one surface thereof and in partial contact with the gasket on the other surface thereof, and electrically connected to the electrode assembly.

## Patentansprüche

1. Zylindrische Sekundärbatterie, umfassend:
eine Elektrodenanordnung vom Biskuitrollen-Typ, in welcher eine erste Elektrode, eine zweite Elektrode und ein Separater (210), welcher zwischen den beiden Elektroden eingefügt ist, zusammen gewickelt sind;
einen Zentrierstift, welcher eingesetzt ist, um den Zentralabschnitt der Elektrodenanordnung vom Biskuitrollen-Typ zu durchdringen;
eine Dose, welche die Elektrodenanordnung und den Zentrierstift aufnimmt;
eine Kappenanordnung, welche mit einer oberen Öffnung der Dose gekoppelt ist, um die Dose abzudichten; und
eine Dichtung, welche zwischen der Dose und der Kappenanordnung eingefügt ist,
**dadurch gekennzeichnet, dass**
ein erstes Elektrodenband (222') an einer ersten Fläche eines unbeschichteten Abschnitts (221) der ersten Elektrode und an einer Fläche des Separators (210), welche der ersten Fläche des unbeschichteten Abschnitts (221) gegenüberliegt, an einem Kern der Elektrodenanordnung vom Biskuitrollen-Typ angebracht ist,
das erste Elektrodenband (222') einen Polymerharzfilm mit einem Schmelzpunkt von wenigstens 130 °C umfasst, welcher aus wenigstens einem Polymer hergestellt ist, welches aus der Gruppe bestehend aus Polyethylenterephthalat, Polyacrylnitril, Polymethylmethacrylat, Polyamid, Polystyrol, Polytetrafluorethylen, Polytetramethylenterephthalat, Polyvinylalkohol, Polyvinylcarbazol, Polyvinylchlorid, Polyvinylidenchlorid und Polyvinylidenfluorid ausgewählt ist, und
das erste Elektrodenband (222') eine oder zwei Klebstoffschichten an beiden Flächen des Polymerharzfilms umfasst.

2. Zylindrische Sekundärbatterie nach Anspruch 1, wobei das erste Elektrodenband (222') an einem Abschnitt der Fläche der ersten Elektrode angebracht ist, welcher von dem distalen Ende des unbeschichteten Abschnitts (221) der ersten Elektrode an dem Kern der Elektrodenanordnung vom Biskuitrollen-Typ bis zu einer 6 bis 10 mm von dem distalen Ende entfernten Position reicht.

3. Zylindrische Sekundärbatterie nach Anspruch 1, wobei das erste Elektrodenband (222') eine Dicke von 10-50 µm aufweist.

4. Zylindrische Sekundärbatterie nach Anspruch 1, wobei der Zentrierstift aus wenigstens einem Material hergestellt ist, welches aus der Gruppe bestehend aus rostfreiem Stahl, Kupfer, Tantal, Titan, Aluminium, Niob, Zink, Zinn, Tantaloxid, Titanoxid, Aluminiumoxid, Nioboxid, Zinkoxid, Zinnoxid, Kupferoxid, Polyethylen, Polypropylen, Polyimid, Polyamid, Polycarbonat und Polymethylmethacrylat ausgewählt ist.

5. Zylindrische Sekundärbatterie nach Anspruch 1, wobei der Zentrierstift eine hohle Struktur aufweist.

6. Zylindrische Sekundärbatterie nach Anspruch 1, wobei der Separator (210) ein poröses Polyolefinsubstrat umfasst.

7. Zylindrische Sekundärbatterie nach Anspruch 6, wobei das poröse Polyolefinsubstrat aus einem Polymer hergestellt ist, welches aus der Gruppe bestehend aus Polyethylen, Polypropylen, Polybutylen und Polypenten ausgewählt ist.

8. Zylindrische Sekundärbatterie nach Anspruch 1, wobei die erste Elektrode eine Kathode ist und die zweite Elektrode eine Anode ist.

9. Zylindrische Sekundärbatterie nach Anspruch 1, wobei die erste Elektrode eine Anode ist und die zweite Elektrode eine Kathode ist.

10. Zylindrische Sekundärbatterie nach Anspruch 1, wobei die Kappenanordnung umfasst: eine obere Kappe, welche ein offenes Ende der Dose verschließt; einen Thermistor mit einem positiven Temperaturkoeffizienten (PTC), welcher in Berührung mit der oberen Kappe angeordnet ist; und ein Sicherheitsventil, welches in Berührung mit dem PTC-Thermistor an einer Fläche davon angeordnet ist und teilweise mit der Dichtung an der anderen Fläche davon in Berührung steht und welches elektrisch mit der Elektrodenanordnung verbunden ist.

## Revendications

1. Batterie secondaire cylindrique comprenant :
un ensemble électrode de type à feuilles enroulées dans lequel une première électrode, une seconde électrode et un séparateur (210) interposé entre les deux électrodes sont enroulés ensemble ;
un pivot inséré pour pénétrer dans la portion centrale de l'ensemble électrode de type à feuilles enroulées ;
un caisson logeant l'ensemble électrode et le pivot ;
un ensemble capuchon couplé à une ouverture supérieure du caisson pour sceller le caisson ; et
un joint d'étanchéité interposé entre le caisson et l'ensemble capuchon,
**caractérisée en ce que**
un premier ruban d'électrode (222') est fixé à une première surface d'une portion non revêtue (221) de la première électrode et à une surface du séparateur (210) opposée à la première surface de la portion non revêtue (221) au niveau d'un centre de l'ensemble électrode de type à feuilles enroulées,
le premier ruban d'électrode (222') comporte un film de résine polymère ayant un point de fusion d'au moins 130 °C fait d'au moins un polymère choisi dans le groupe constitué de polytéréphtalate d'éthylène, polyacrylonitrile, polyméthacrylate de méthyle, polyamide, polystyrène, polytétrafluoroéthylène, polytéréphtalate de tétraméthylène, polyalcool vinylique, polyvinylcarbazole, polychlorure de vinyle,
polychlorure de vinylidène et polyfluorure de vinylidène, et
le premier ruban d'électrode (222') comprend une ou deux couches d'adhésif sur les deux surfaces du film de résine polymère.

2. Batterie secondaire cylindrique selon la revendication 1, dans laquelle le premier ruban d'électrode (222') est fixé à une portion de la surface de la première électrode allant de l'extrémité distale de la portion non revêtue (221) de la première électrode au niveau du centre de l'ensemble électrode de type à feuilles enroulées jusqu'à une position distante de 6 à 10 mm de l'extrémité distale.

3. Batterie secondaire cylindrique selon la revendication 1, dans laquelle le premier ruban d'électrode (222') a une épaisseur de 10 à 50 µm.

4. Batterie secondaire cylindrique selon la revendication 1, dans laquelle le pivot est fait d'au moins un matériau choisi dans le groupe constitué d'acier inoxydable, de cuivre, de tantale, de titane, d'aluminium, de niobium, de zinc, d'étain, d'oxyde de tantale, d'oxyde de titane, d'oxyde d'aluminium, d'oxyde de niobium, d'oxyde de zinc, d'oxyde d'étain, d'oxyde de cuivre, de polyéthylène, de polypropylène, de polyimide, de polyamide, de polycarbonate et de polyméthacrylate de méthyle.

5. Batterie secondaire cylindrique selon la revendication 1, dans laquelle le pivot a une structure creuse.

6. Batterie secondaire cylindrique selon la revendication 1, dans laquelle le séparateur (210) comprend un substrat de polyoléfine poreux.

7. Batterie secondaire cylindrique selon la revendication 6, dans laquelle le substrat de polyoléfine poreux est fait d'un polymère choisi dans le groupe constitué de polyéthylène, de polypropylène, de polybutylène et de polypentène.

8. Batterie secondaire cylindrique selon la revendication 1, dans laquelle la première électrode est une cathode et la seconde électrode est une anode.

9. Batterie secondaire cylindrique selon la revendication 1, dans laquelle la première électrode est une anode et la seconde électrode est une cathode.

10. Batterie secondaire cylindrique selon la revendication 1, dans laquelle l'ensemble capuchon comprend : un capuchon supérieur fermant une extrémité ouverte du caisson ; une thermistance à coefficient de température positif (CTP) agencée en contact avec le capuchon supérieur ; et un évent de sécurité agencé en contact avec la thermistance de CTP sur une surface de celle-ci et en contact partiel avec le joint d'étanchéité sur l'autre surface de celle-ci, et connecté électriquement à l'ensemble électrode.
